# EUROPÄISCHE PATENTSCHRIFT

(11) **EP 0 677 538 B1**
(45) Veröffentlichungstag und Bekanntmachung des Hinweises auf die Patenterteilung: **17.09.1997**
(21) Anmeldenummer: 95105347.9
(22) Anmeldetag: 08.04.1995
(51) Int. Cl.: C08F 214/26, C09D 5/26

(54) **Copolymere aus Tetrafluorethylen, Hexafluorpropylen und Ethylen**
Tetrafluoroethylene-hexafluoropropene-ethylene copolymers
Copolymères de tétrafluoréthylène, hexafluoropropène et éthylène

(30) Priorität: 14.04.1994 DE 4412789
(43) Veröffentlichungstag der Anmeldung: 18.10.1995
(73) Patentinhaber: Dyneon GmbH, 84504 Burgkirchen (DE)
(72) Erfinder: Mayer, Ludwig, Dr., D-84489 Burghausen (DE); Hirsch, Bernhard, D-84508 Burgkirchen (DE); Stamprech, Peter, D-84508 Burgkirchen (DE)

(56) Entgegenhaltungen:
- EP-A- 0 197 490
- CHEMICAL ABSTRACTS, vol. 83, no. 8, 25.August 1975 Columbus, Ohio, US; abstract no. 60326j, Seite 78; Spalte 2;

## Beschreibung

Die Erfindung betrifft Copolymere mit einem Gehalt an 45 bis 55 Mol-% Einheiten des Tetrafluorethylens (TFE), 10 bis 20 Mol-% Einheiten des Hexafluorpropylens (HFP) und 25 bis 40 Mol-% Einheiten des Ethylens (ET) und einem Schmelzpunkt im Bereich von etwa 140 bis etwa 170 °C. Ein Gehalt an weiteren, mit den genannten Monomeren verträglichen Comonomeren in untergeordneten Mengen ist hierbei nicht ausgeschlossen.

Bevorzugte Copolymere enthalten 48 bis 55 Mol-% TFE, 11 bis 18 Mol-% HFP und 27 bis 39 Mol-%, insbesondere 29 bis 38 Mol-%, ET.

Bezogen auf das Gewicht enthalten die erfindungsgemäßen Copolymeren etwa 53 bis 69 % TFE, etwa 18 bis 36 % HFP und etwa 7 bis 15 % ET.

Die erfindungsgemäßen Polymeren zeichnen sich durch ihren relativ niedrigen Schmelzpunkt aus. Sie eignen sich deshalb zur Verarbeitung aus der Schmelze mit Substraten, die keine höhere Temperaturbelastung vertragen, wie Fasermaterialien oder temperaturempfindliche Kunststoffe.

Terpolymere aus TFE, HFP und ET sind seit langem bekannt: In der US-A 3 817 951 sind Terpolymere der Zusammensetzung (in Molprozent) 40 bis 60 % ET, 20 bis 30 % TFE und 10 bis 30 % HFP beschrieben. Es wird ausdrücklich darauf hingewiesen, daß die vorteilhaften Eigenschaften dieser Terpolymere nur innerhalb dieses kritischen engen Bereichs der genannten Proportionen gegeben seien. Entsprechend dem niedrigen TFE-Gehalt enthalten die in den Beispielen genannten Terpolymeren 46 beziehungsweise 50 Mol-% ET.

Die US-A 4 338 237 betrifft ein Verfahren zur Herstellung stabiler wäßriger kolloidaler Dispersionen von Copolymeren, unter anderem auch Terpolymeren aus TFE, HFP und ET. Der Gehalt an TFE beträgt 30 bis 60 Mol-%, der an HFP 0 bis 15 Mol-% und der an ET 40 bis 60 Mol-%. Die in den Beispielen genannten Terpolymeren aus diesen Monomeren enthalten 4,5 beziehungsweise 4,7 Mol-% HFP und entsprechend 46,5 beziehungsweise 46,8 Mol-% ET. Die konzentrierten Dispersionen sind zur Imprägnierung oder Beschichtung von Fasermaterialien und Oberflächen geeignet und die koagulierten Dispersionen können zu Schmelzgranulat aufgearbeitet werden. In dieser Form können dann die Copolymeren aus der Schmelze verarbeitet werden.

Aus der EP-B 92 675 sind Umhüllungsmaterialien für optische Fasern bekannt, wobei ein Copolymer von 30 bis 60 Mol-% Ethylen, 20 bis 69 Mol-% TFE oder Chlortrifluorethylen und 1 bis 30 Mol-% eines weiteren Olefins, das HFP sein kann, Verwendung findet. Das Beispiel 1 betrifft ein Terpolymer aus 55 Mol-% ET, 25 Mol-% TFE und 20 Mol-% HFP; das Vergleichsbeispiel 3 betrifft ein Terpolymer aus 70 Mol-% ET, 23 Mol-% TFE und 7 Mol-% HFP.

Die Herstellung der erfindungsgemäßen Copolymeren kann in an sich bekannter Weise erfolgen, wie es auch in den vorstehend genannten Druckschriften beschrieben ist. Bevorzugt erfolgt die Copolymerisation im wäßrigen Medium, gegebenenfalls mit einem niedermolekularen Kohlenwasserstoff als Kettenübertragungsmittel, und einem Redoxsystem als Starter.

Die erfindungsgemäßen Copolymeren weisen eine hohe Beständigkeit gegenüber aggressiven Medien auf. In Verbindung mit dem relativ niedrigen Schmelzpunkt eignen sie sich deshalb zur Beschichtung oder Auskleidung von Formkörpern, die keine hohe Temperaturbelastung vertragen. Man kann hierfür beispielsweise die Copolymeren zunächst zu einer Folie verarbeiten, die dann mit dem Substrat verschweißt wird, gegebenenfalls unter Zuhilfenahme eines geeigneten Binders.

Die Erfindung wird in den folgenden Beispielen näher erläutert. Prozentangaben beziehen sich auf das Gewicht, wenn keine anderen Angaben gemacht sind.

### Beispiel 1

In einem innen emaillierten Polymerisationsreaktor mit einem Gesamtvolumen von 195 l, versehen mit einem Impellerrührer, werden 120 l entsalztes Wasser eingefüllt und darin 500 g Ammoniumperfluoroctanoat (in Form von 1667 g einer 30%igen Lösung in Wasser, Handelsprodukt der Firma 3M), 242 g Diammoniumoxalat-Monohydrat und 69 g Oxalsäure-Monohydrat aufgelöst. Nach Abdichten des Reaktors wird zunächst fünfmal mit Stickstoff und anschließend einmal mit 1 bar TFE gespült.

Nach Entspannen und Aufheizen auf 43 °C werden über eine Leitung 10 g n-Pentan und 9 kg HFP unter mäßigem Rühren eingepumpt. Die Rührung wird dann auf 210 Upm erhöht und dem Reaktor über die Gasphase 2,05 kg TFE und 133 g ET zugeführt, so daß ein Gesamtdruck von 17 bar erreicht wird.

Danach wird die Polymerisation durch Einpumpen einer Lösung von 5 g Kaliumpermanganat in 250 ml Wasser gestartet und durch kontinuierliche Zufuhr von 14 g Kaliumpermanganat - gelöst in 0,7 l Wasser - pro Stunde aufrechterhalten. Der Gesamtmonomerdruck von 17 bar wird automatisch durch kontinuierliche Zuspeisung eines Gemisches im molaren Verhältnis von TFE : ET : HFP = 2,3 : 1,7 : 1 beibehalten.

Die Reaktion wird bei einem Copolymer-Feststoffgehalt, bezogen auf eingesetztes wäßriges Reaktionsmedium, von etwa 21 % durch Entspannen des Monomerengemisches abgebrochen.

Nun wird die Dispersion durch den schnell laufenden Rührer koaguliert. Der ausgefällte Copolymerisat-Feststoff wird von der Flotte abgetrennt, mehrmals mit Wasser gewaschen, unter Stickstoffatmosphäre 15 Stunden bei 110 °C getrocknet und anschließend schmelzgranuliert.

Die Polymerzusammensetzung und weitere charakteristische Daten sind in der nachstehenden Tabelle zusammengefaßt.

### Beispiele 2 bis 5

Die Beispiele 2 bis 5 werden analog Beispiel 1 durchgeführt. Änderungen, zum Beispiel der Comonomerendosierung, sind ebenso wie die Polymereigenschaften in der nachstehenden Tabelle erfaßt.

**Tabelle**

| Beispiel-Nr. | | | 1 | 2 | 3 | 4 | 5 |
|---|---|---|---|---|---|---|---|
| Polymerisationstemperatur [°C] | | | 43,0 | 41,0 | 45,0 | 49,0 | 42,0 |
| | | | | | | | |
| TFE: | Gesamtmenge [kg] | | 20,35 | 15,68 | 15,33 | 13,40 | 20,40 |
| | davon vorgelegt [kg] | | 2,05 | 2,18 | 1,83 | 1,27 | 2,10 |
| | davon nachdosiert [kg] | | 18,30 | 13,50 | 13,50 | 12,13 | 18,30 |
| | | | | | | | |
| HFP: | Gesamtmenge [kg] | | 20,88 | 16,33 | 18,20 | 19,07 | 20,88 |
| | davon vorgelegt [kg] | | 9,00 | 8,61 | 9,50 | 10,50 | 9,00 |
| | davon nachdosiert [kg] | | 11,88 | 7,72 | 8,70 | 8,57 | 11,88 |
| | | | | | | | |
| ET: | Gesamtmenge [kg] | | 3,82 | 2,85 | 2,24 | 1,84 | 3,79 |
| | davon vorgelegt [kg] | | 0,133 | 0,149 | 0,087 | 0,070 | 0,133 |
| | davon nachdosiert [kg] | | 3,69 | 2,70 | 2,16 | 1,77 | 3,66 |
| | | | | | | | |
| n-Pentan [g] | | | 10,00 | 15,00 | --- | --- | 20,00 |
| | | | | | | | |
| KMnO₄ [g] | | | 66,00 | 50,00 | 51,00 | 75,00 | 66,00 |
| | | | | | | | |
| Polymerisationsdauer [h] | | | 5,00 | 3,30 | 2,80 | 4,20 | 5,00 |
| | | | | | | | |
| Polymerisatfeststoffgehalt [%] | | | 20,50 | 15,10 | 15,30 | 15,40 | 20,10 |
| | | | | | | | |
| MFI 5 kg/297 °C [g/10 min] | | | 7 | 21 | 0,6 | 17,8 | 57,0 |
| | | | | | | | |
| Fp nach DSC [°C] | | | 155 | 169 | 152 | 140 | 159 |
| | | | | | | | |
| Fluor-Gehalt [%] | | | 65,9 | 65,9 | 68,2 | 68,8 | 65,9 |
| | | | | | | | |
| Produktzusammensetzung: (NMR) | | TFE[Mol-%] | 48,73 | 50,57 | 54,05 | 52,49 | 49,44 |
| | | HFP [Mol-%] | 13,51 | 11,94 | 14,80 | 17,87 | 12,91 |
| | | ET [Mol-%] | 37,76 | 37,49 | 31,15 | 29,64 | 37,66 |
| MFI: Melt Flow Index bei 297 °C und 5 kg Last entsprechend DIN 53 735/ASTM D 3159. | | | | | | | |

## Patentansprüche

1. Copolymer mit einem Gehalt an 45 bis 55 Mol-% Einheiten des Tetrafluorethylens, 10 bis 20 Mol-% Einheiten des Hexafluorpropylens und 25 bis 40 Mol-% Einheiten des Ethylens und einem Schmelzpunkt im Bereich von etwa 140 bis etwa 170 °C.

2. Copolymer nach Anspruch 1, gekennzeichnet durch einen Gehalt an 48 bis 55 Mol-% Einheiten des Tetrafluorethylens, 11 bis 18 Mol-% Einheiten des Hexafluorpropylens und 27 bis 39 Mol-% Einheiten des Ethylens.

3. Copolymer nach Anspruch 2, gekennzeichnet durch einen Gehalt an 29 bis 38 Mol-% Einheiten des Ethylens.

4. Verwendung der Copolymeren nach einem oder mehreren der Ansprüche 1 bis 3 zur Ausrüstung von temperaturempfindlichen Substraten.

5. Verwendung der Copolymeren nach einem oder mehreren der Ansprüche 1 bis 3 zur Herstellung einer Folie.

6. Substrat, überzogen mit einem Copolymer nach einem oder mehreren der Ansprüche 1 bis 3.

7. Folie, bestehend im wesentlichen aus einem Copolymer nach einem oder mehreren der Ansprüche 1 bis 3.

## Claims

1. A copolymer containing from 45 to 55 mol % of units of tetrafluoroethylene, from 10 to 20 mol % of units of hexafluoropropylene and from 25 to 40 mol % of units of ethylene and having a melting point in the range from about 140 to about 170°C.

2. A copolymer as claimed in claim 1, containing from 48 to 55 mol % of units of tetrafluoroethylene, from 11 to 18 mol % of units of hexafluoropropylene and from 27 to 39 mol % of units of ethylene.

3. A copolymer as claimed in claim 2, containing from 29 to 38 mol % of units of ethylene.

4. Use of a copolymer as claimed in one or more of claims 1 to 3 for coating temperature-sensitive substrates.

5. Use of a copolymer as claimed in one or more of claims 1 to 3 for producing a film.

6. A substrate coated with a copolymer as claimed in one or more of claims 1 to 3.

7. A film consisting essentially of a copolymer as claimed in one or more of claims 1 to 3.

## Revendications

1. Copolymère ayant une teneur de 45 à 55 % en moles en motifs de tétrafluoréthylène, de 10 à 20 % en moles en motifs d'hexafluoropropylène et de 25 à 40 % en moles en motifs d'éthylène et un point de fusion dans l'intervalle d'environ 140 à environ 170 °C.

2. Copolymère selon la revendication 1, caractérisé par une teneur de 48 à 55 % en moles en motifs de tétrafluoréthylène, de 11 à 18 % en moles en motifs d'hexafluoropropylène et de 27 à 39 % en moles en motifs d'éthylène.

3. Copolymère selon la revendication 2, caractérisé par une teneur de 29 à 38 % en moles de motifs d'éthylène.

4. Utilisation du copolymère selon une ou plusieurs des revendications 1 à 3 pour munir des substrats sensibles à la température.

5. Utilisation du copolymère selon une ou plusieurs des revendications 1 à 3 pour la préparation de feuilles.

6. Substrat revêtu d'un copolymère selon une ou plusieurs des revendications 1 à 3.

7. Feuille composée essentiellement d'un copolymère selon une ou plusieurs des revendications 1 à 3.
